# EUROPEAN PATENT APPLICATION

(11) **EP 4 671 532 A1**
(43) Date of publication of application: **31.12.2025**
(21) Application number: 25181012.3
(22) Date of filing: 05.06.2025
(51) Int. Cl.: F03D 7/04, F03D 17/00

(54) **METHOD AND APPARATUS FOR ASSESSING STATUS OF WIND TURBINES, AND STORAGE MEDIUM**

(30) Priority: 27.06.2024 CN 202410845907
(71) Applicant: Envision Energy Technology Pte Ltd., 079903 Singapore (SG)
(72) Inventor: DING, Yiming, 079903 Singapore (SG); WANG, Guolei, 079903 Singapore (SG); WEI, Xiaohui, 079903 Singapore (SG); KONG, Chen, 079903 Singapore (SG); XU, Bin, 079903 Singapore (SG)
(74) Representative: Balder IP Law, S.L.

(57) **Abstract**

A method and an apparatus for assessing status of wind turbines, and a storage medium are provided. The method includes: constructing a wake surrogate model; arranging wind turbines in a wind turbine array in a direction of a wind speed; inputting the wind condition information and the wind turbine information of the first wind turbine of the wind turbines into the wake surrogate model to obtain a velocity deficit percentage and an additional turbulence intensity value at each point in a wake region of the first wind turbine; for each current wind turbine of the wind turbines starting from a second wind turbine of the wind turbines, updating wind condition information of a current wind turbine; and obtaining, for each wind turbine of the wind turbines, an amount of generated power and a load of the wind turbine.

## Description

### TECHNICAL FIELD

The various embodiments described in this document relate in general to the field of wind turbine power generation prediction, and more specifically to a method and apparatus for assessing status of wind turbines, and a storage medium.

### BACKGROUND

With the increasing proportion of clean energy, the relative peak regulation capability of traditional thermal power generation has begun to decline. Therefore, the assessment and prediction of wind power generation and load have become increasingly important.

Traditional methods for predicting and assessing an amount of generated power of each of wind turbines are typically based on a wind speed, a turbulence intensity, and properties of the wind turbines. However, in reality, the wind turbines are generally arranged in a meandering pattern along riverbanks, coastlines, or canyons. As a result, a wake of an upstream wind turbine can affect a wake of a downstream wind turbine. Consequently, even for the same turbine positioned identically at a same moment, its amount of generated power may vary depending on the intensity of wake of the upstream wind turbines.

For this, some existing technologies, for example, Chinese Patent Application CN117875221A discloses a novel wind turbine wake coupling method, which relates to the field of wind turbine engineering calculations. In this method, the wind turbine wake is divided into three distinct regions: a near-wake region, a coupling region, and a far-wake region, and an appropriate computational model is selected for each of the different regions, to achieve high computational accuracy and good efficiency. In the above wind turbine wake coupling method, CFD numerical simulations based on the actuator line method are employed to model the near-wake field of the wind turbine to obtain the aerodynamic performance of the turbines, such as thrust and power, as well as key wake information, and the far-wake field of the wind turbine is calculated using the dynamic wake meandering (DWM) method. This existing technology combines the DWM method with the CFD method. However, it suffers from low computational efficiency, which can lead to significant delays and excessive heat generation when applied to large-scale coastal or offshore wind turbine arrays. Moreover, although the existing technology has improved the DWM method, it does not take into account the wind turbine models and various wind conditions. Therefore, the existing technology cannot be used to assess the amount of generated power and load of the wind turbine in actual engineering design, and thus is difficult to be used in practical scenarios.

### SUMMARY

Embodiments of the disclosure provide a method and apparatus for assessing status of wind turbines, and a storage medium.

The objective of the present disclosure can be achieved through the following technical solutions.

Embodiments of the disclosure provide a method for assessing status of wind turbines. The method includes following operations. A wake surrogate model corresponding to a wind turbine is constructed, where the wake surrogate model is configured to obtain a velocity deficit percentage and an additional turbulence intensity value at each point in a wake region of the wind turbine based on wind condition information and wind turbine information. Wind turbines in a wind turbine array in a direction of a wind speed are arranged. Wind condition information and wind turbine information of a first wind turbine of the wind turbines are obtained and the wind condition information and the wind turbine information of the first wind turbine are inputted into the wake surrogate model to obtain a velocity deficit percentage and an additional turbulence intensity value at each point in a wake region corresponding to the first wind turbine. For each current wind turbine of the wind turbines starting from a second wind turbine of the wind turbines, an overlapping area between a rotor plane of a current wind turbine and a wake region of a previous wind turbine is calculated. In response to the overlapping area being not equal to zero, a velocity deficit percentage at each point in the wake region of the previous wind turbine is updated based on a relationship between the overlapping area and an area of the rotor plane of the current wind turbine, an additional turbulence intensity value and an updated velocity deficit percentage at each point in the wake region of the previous wind turbine is superimposed onto wind condition information of the current wind turbine, and a superimposed wind condition information of the current wind turbine is determined as an updated wind condition information of the current wind turbine. For each wind turbine of the wind turbines, an amount of generated power and a load of the wind turbine are obtained according to the wind turbine information and the updated wind condition information of the wind turbine.

In some embodiments, the wind condition information includes at least a wind speed and a turbulence intensity.

In some embodiments, the wake surrogate model corresponding to the wind turbine is constructed as follows: generating multiple virtual inflow wind conditions and extracting wind speed information of each of the multiple virtual inflow wind conditions; for each type of wind turbines among multiple types of turbine types, performing simulating across each of the multiple virtual inflow wind conditions to obtain a velocity deficit percentage and an additional turbulence intensity value at each point in the wake region of the type of wind turbines under each of the multiple virtual inflow wind conditions; and constructing the wake surrogate model corresponding to the wind turbine based on the velocity deficit percentage and the additional turbulence intensity value at each point in the wake region of each type of wind turbine under each of the multiple virtual inflow wind conditions.

In some embodiments, updating the velocity deficit percentage at each point in the wake region of the previous wind turbine based on the relationship between the overlapping area and the area of the rotor plane of the current wind turbine includes: calculating an area ratio of the overlapping area and the area of the rotor plane of the current wind turbine, and updating the velocity deficit percentage at each point in the wake region of the previous wind turbine based on the area ratio obtained.

In some embodiments, the method further includes following operations: determining, in response to the overlapping area between the rotor plane of the current wind turbine and the wake region of the previous wind turbine being equal to zero, the wind condition information of the current wind turbine that has not been subjected to superimposing as the updated wind condition information of the current wind turbine.

In some embodiments, updating the velocity deficit percentage at each point in the wake region of the previous wind turbine based on the area ratio obtained includes: multiplying the area ratio obtained with the velocity deficit percentage at each point in the wake region of the previous wind turbine to obtain an updated velocity deficit percentage at each point in the wake region of the previous wind turbine.

In some embodiments, the method further includes following operations: for a respective wind turbine of the wind turbines other than the first wind turbine and a last wind turbine of the wind turbines, obtaining the velocity deficit percentage and the additional turbulence intensity value at each point in the wake region of the respective wind turbine based on the wind turbine information and the updated wind condition information of the respective wind turbine.

In some embodiments, obtaining, for each wind turbine of the wind turbines, the amount of generated power and the load of the wind turbine according to the wind turbine information and the updated wind condition information of the wind turbine includes: for each wind turbine of the wind turbines, obtaining the amount of generated power of the wind turbine according to the wind turbine information and a time series of the updated wind condition information of the wind turbine; obtaining a wind frequency turbulence matrix according to the time series of the updated wind condition information of the wind turbine; and reconstructing a three-dimensional wind condition for wind turbine load simulation according to the wind frequency turbulence matrix to calculate the load of the wind turbine.

Embodiments of the disclosure provide an apparatus for assessing status of wind turbines based on a dynamic wake meandering model, including at least one memory, at least one processor, and programs stored in the at least one memory, where the programs, when executed by the at least one processor, causes the at least one processor to perform any operation of the method described in the above embodiments.

Embodiments of the disclosure provide a non-transitory computer-readable storage medium, on which a program is stored, where the program, when executed by a processor, causes the processor to perform any operation of the method described in the above embodiments.

Compared with the existing technologies, the present disclosure has the following beneficial effects.

The model is constructed based on the wind turbine, characteristics of wakes under different wind conditions can be accurately reflected, accuracy and computational efficiency may be balanced, loss of computational efficiency is minimal, and the prediction results are closer to the measured values.

The updating of the velocity deficit percentage using the area ratio simplifies the wind speed attenuation calculation of the dynamic wake meandering (DWM) model under partial wake blockage.

The construction of a surrogate model addresses the computational efficiency issue faced by the dynamic wake meandering (DWM) model in engineering applications, making it more convenient to use.

### BRIEF DESCRIPTION OF THE DRAWINGS

FIG. 1 is a flow chart illustrating main operations of a method for assessing status of wind turbines according to embodiments of the disclosure.
FIG. 2 is a schematic diagram of an actual wind farm.
FIG. 3 is a schematic diagram of prediction results of loads.
FIG. 4 is a schematic diagram of prediction results of amounts of generated power.
FIG. 5 is a schematic diagram of a wind turbine according to embodiments of the disclosure.
FIG. 6 is a schematic block diagram of an apparatus for assessing status of wind turbines according to embodiments of the disclosure.

### DETAILED DESCRIPTION OF THE EMBODIMENTS

The following is a detailed illustration of the present disclosure in conjunction with the accompanying drawings and specific embodiments. The implementation of this embodiment is based on the technical solution of the present disclosure, providing detailed implementation methods and specific operational processes. However, the scope of protection of the present disclosure is not limited to the following embodiments.

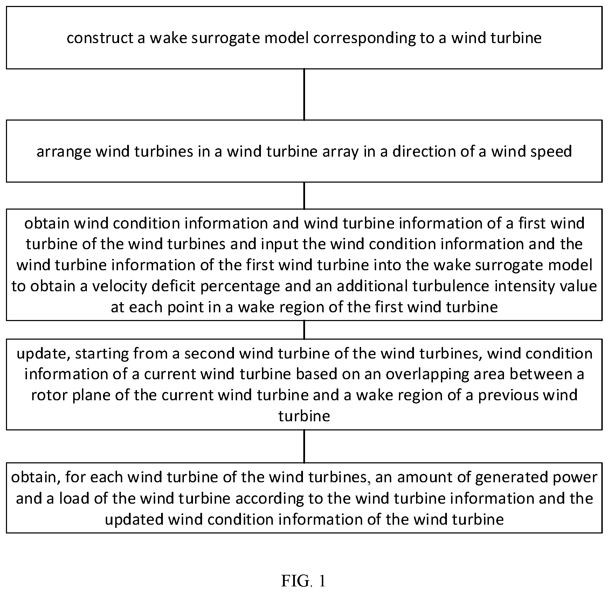

A method for assessing status of wind turbines based on a dynamic wake meandering model is shown in FIG. 1 and includes following operations.

A wake surrogate model corresponding to a wind turbine is constructed, where the wake surrogate model is configured to obtain a velocity deficit percentage and an additional turbulence intensity value at each point in a wake region of the wind turbine based on wind condition information and wind turbine information.

In some embodiments, "each point" in the expression "each point in the wake region" refers to specific coordinate points (e.g., in a 2D/3D grid) distributed across the wake region behind the wind turbine. Each point represents a unique spatial position where wake effects (e.g., velocity deficit and turbulence intensity) are calculated or measured.

In addition, it also shall be noted that the "velocity deficit percentage" refers to percentage reduction in a wind speed at a specific spatial location within the wake region compared to the undisturbed free-stream wind speed upstream of the wind turbine. For example, if the free-stream wind speed is 10 m/s and the wind speed at a specific point within the wake region is 8 m/s, the velocity deficit percentage at that point is 20%.

The "additional turbulence intensity value" is also known as the turbulence intensity increment or the turbulence intensity addition, which refers to the incremental increase in turbulence intensity (a dimensionless measure of flow irregularity) at a specific wake point relative to the ambient turbulence intensity in the undisturbed incoming wind flow. For example, if the free-stream turbulence intensity is 5% and the turbulence intensity at a specific point within the wake region is 12%, the turbulence intensity addition at that point is 7%.

Wind turbines in a wind turbine array are sequentially arranged in a direction of a wind speed.

Wind condition information and wind turbine information of a first wind turbine of the wind turbines are obtained and are inputted into the wake surrogate model to obtain a velocity deficit percentage and an additional turbulence intensity value at each point in a wake region of the first wind turbine.

For each current wind turbine of the wind turbines starting from a second wind turbine of the wind turbines, an overlapping area between a rotor plane of a current wind turbine and a wake region of a previous wind turbine is calculated. If the overlapping area is not equal to zero, a velocity deficit percentage at each point in the wake region of the previous wind turbine is updated based on a relationship between the overlapping area and an area of the rotor plane of the current wind turbine, an additional turbulence intensity value and an updated velocity deficit percentage at each point in the wake region of the previous wind turbine are superimposed onto wind condition information of the current wind turbine, and superimposed wind condition information of the current wind turbine is determined as updated wind condition information of the current wind turbine.

For each wind turbine of the wind turbines in the wind turbine array, an amount of generated power and a load of the wind turbine are obtained according to the wind turbine information and the updated wind condition information of the wind turbine.

Generally, in embodiments of the disclosure, the wind condition information includes at least a wind speed and a turbulence intensity. In other embodiments, the wind condition information further includes other information, which can be obtained as needed and is not limited in the disclosure. For example, in embodiments of the disclosure, the wind condition information further includes wind shear, atmospheric stability, and an inflow angle. However, in other embodiments, in addition to the wind speed and the turbulence intensity, the wind condition information may further include any combination of the wind shear, the atmospheric stability, the inflow angle, the air density, and the like.

Furthermore, in this embodiment, the wind turbine information (wind turbine parameters) includes a wind turbine geometric model (such as a blade geometry shape, a tower height, a rotor diameter, etc.) and a wind turbine controller. However, in other embodiments, in addition to the wind turbine geometric model and the wind turbine controller, the wind turbine information may further include any combination of power curves, thrust coefficient curves, and noise curves.

In this embodiment, the wake surrogate model corresponding to the wind turbine is constructed as follows.

Multiple virtual inflow wind conditions are generated and wind speed information of each of the multiple virtual inflow wind conditions is extracted.

For each type of wind turbines among multiple types of turbine types, simulation is conducted across each of the multiple virtual inflow wind conditions to obtain a velocity deficit percentage and an additional turbulence intensity value at each point in the wake region of the type of wind turbines under each of the multiple virtual inflow wind conditions.

The wake surrogate model corresponding to the wind turbine is constructed based on the velocity deficit percentage and the additional turbulence intensity value at each point in the wake region of each type of wind turbine under each of the multiple virtual inflow wind conditions.

The process of simulating across all the multiple virtual inflow wind conditions for each type of wind turbines to obtain the velocity deficit percentage and the additional turbulence intensity value at each point in the wake region of each type of wind turbines under each of the virtual inflow wind conditions is specifically implemented through a dynamic wake meandering (DWM) simulation platform.

In this embodiment, the velocity deficit percentage at each point in the wake region of the previous wind turbine is updated based on the relationship between the overlapping area and the area of the rotor plane of the current wind turbine as follows. An area ratio of the overlapping area to the area of the rotor plane of the current wind turbine, and the velocity deficit percentage at each point in the wake region of the previous wind turbine is updated based on the area ratio obtained. It shall be noted that in other embodiments, other methods can also be used to update the velocity deficit percentage at each point in the wake region of the previous wind turbine. For example, in one embodiment, starting from the second wind turbine of the wind turbines, a radius of a wake region of the previous wind turbine and a radial distance between the previous wind turbine and the current wind turbine are calculated. If the radial distance is less than the radius of the wake region, the full velocity deficit and turbulence addition values are applied to downstream turbines.

In other words, the full magnitude of velocity deficit and turbulence intensity addition is fully applied (i.e., no reduction or attenuation) to all points within the wake radius.

For another example, if a difference between the radial distance and the radius of the wake region is less than a rotor radius, an overlap coefficient is calculated by using the rotor radius as the denominator and a difference between the radial distance and the radius of the wake region as the numerator, and the velocity deficit percentage and the additional turbulence intensity value are updated based on the overlap coefficient.

In other words, the overlap coefficient is used to adjust the velocity deficit percentage and the additional turbulence intensity value, in order to more accurately reflect the wake effect under different degrees of overlap. For example, the velocity deficit percentage caused by the wake is proportional to the overlap coefficient, and the turbulence enhancement effect also scales linearly with the overlap coefficient.

For yet another example, if the difference between the radial distance and the radius of the wake region is greater than the rotor radius, the effect of the wake is not taken into account.

In some embodiments, if the overlapping area between the rotor plane of the current wind turbine and the wake region of the previous wind turbine is 0, i.e., if there is no overlapping area between the rotor plane of the current wind turbine and the wake region of the previous wind turbine, the wind condition information of the current wind turbine that has not been subjected to superimposing is determined as the updated wind condition information of the current wind turbine.

Specifically, in embodiments of the disclosure, the velocity deficit percentage at each point in the wake region of the previous wind turbine is updated based on the area ratio obtained as follows. The obtained area ratio is multiplied with the velocity deficit percentage at each point in the wake region of the previous wind turbine to obtain an updated velocity deficit percentage at each point in the wake region of the previous wind turbine. For example, non-complete blockage velocity deficit can be considered, improving the accuracy of wake prediction. It shall be noted that, in other embodiments, other update methods can also be employed.

In some embodiments, the method further includes following operations.

For each wind turbine of the wind turbines other than the first wind turbine and a last wind turbine of the wind turbines, the velocity deficit percentage and the additional turbulence intensity value at each point in the wake region of the wind turbine are obtained based on the wind turbine information and the updated wind condition information of the wind turbine.

In some embodiments, for each wind turbine of the wind turbines in the wind turbine array, the amount of generated power and the load of the wind turbine are obtained according to the wind turbine information and the updated wind condition information of the wind turbine as follows.

The amount of generated power of the wind turbine is obtained according to the wind turbine information and a time series of the updated wind condition information of the wind turbine.

It shall be noted that "time series of the updated wind condition information" refers to a sequence of data points that capture the changes in wind conditions over time, after adjustments or updates have been made to account for various factors such as wake effects, atmospheric conditions, or measurement corrections. This sequence includes parameters like wind speed, wind direction, turbulence intensity, and other relevant meteorological data, all recorded at different time intervals.

A wind frequency turbulence matrix is obtained according to the time series of the updated wind condition information of the wind turbine.

The term "wind frequency turbulence matrix" also known as "wind speed-turbulence intensity frequency matrix" or "binned wind speed-turbulence joint frequency matrix", which refers to a matrix that captures the relationship between wind speed frequencies and corresponding turbulence intensities. This matrix is typically constructed from time series data of wind conditions, where each element in the matrix represents the frequency of occurrence of a specific wind speed combined with a specific level of turbulence intensity.

In other words, the wind frequency turbulence matrix is a statistical representation that quantifies the joint probability distribution of wind speed and turbulence intensity over a specified period (e.g., annual, seasonal). It is constructed by: binning wind speed into discrete intervals (e.g., 1 m/s bins from 3 m/s to 25 m/s); binning turbulence intensity into discrete intervals (e.g., 1% bins from 5% to 20%); and calculating the frequency of occurrence (%) for each combination of wind speed and turbulence intensity.

A three-dimensional wind condition for wind turbine load simulation is constructed according to the wind frequency turbulence matrix to calculate the load of the wind turbine.

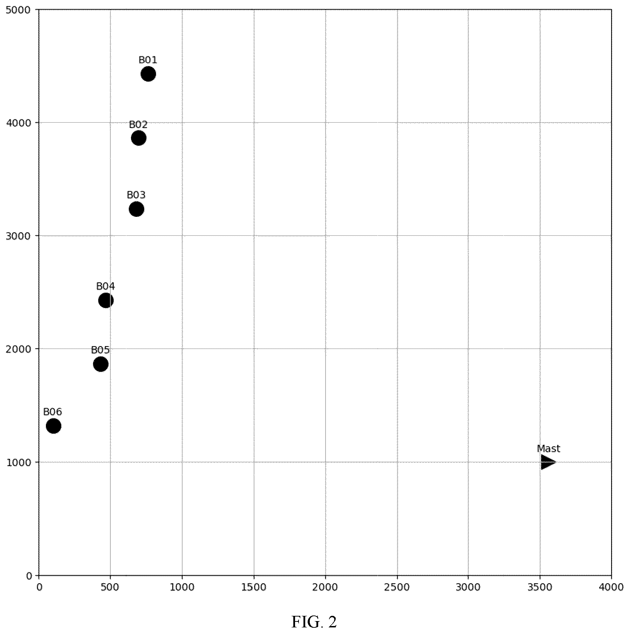

Taking the actual wind farm shown in FIG. 2 as an example, locations of the wind turbines and a met mast in the wind farm are shown in Table 1. The wind farm is equipped with 5.6MW wind turbines with a rotor diameter of 156m and a tower height of 160m.

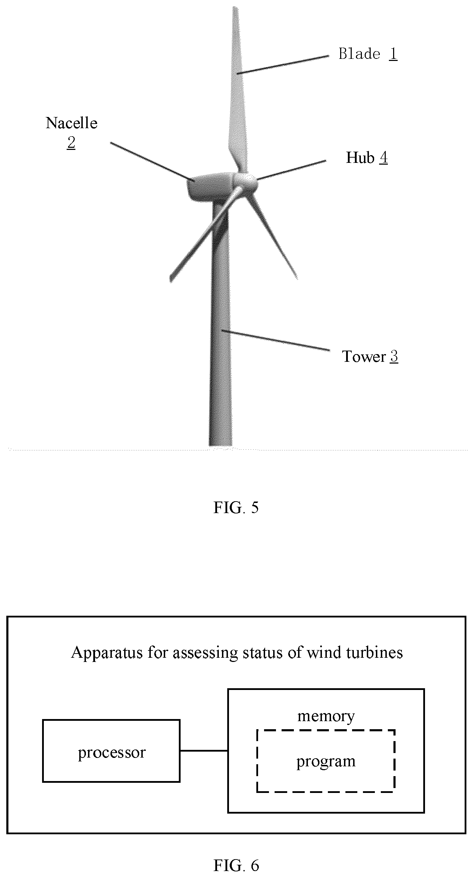

For example, FIG. 5 is a schematic diagram of a wind turbine according to embodiments of the disclosure. As illustrated in FIG. 5, a wind turbine typically includes, but not limited to, a tower 3, a nacelle 2, a hub 4, and blades 1. The hub 4 and the blades 1 are combined to form a rotor. The nacelle 2 is installed on the tower 3, the hub 4 is installed at a front end of the nacelle 2, and the three blades 1 are installed symmetrically along a side wall surface of the hub 4.

**Table 1 Coordinates of turbine locations and met mast**

| Names | Horizontal axis (m) | Vertical axis (m) |
|---|---|---|
| met mast | 3559.6141 | 1000 |
| B01 | 762.93439 | 4429.6191 |
| B02 | 696.33568 | 3863.1381 |
| B03 | 680.96531 | 3234.5191 |
| B04 | 469.50529 | 2431.9936 |
| B05 | 434.88773 | 1865.2337 |
| B06 | 100 | 1322.7641 |

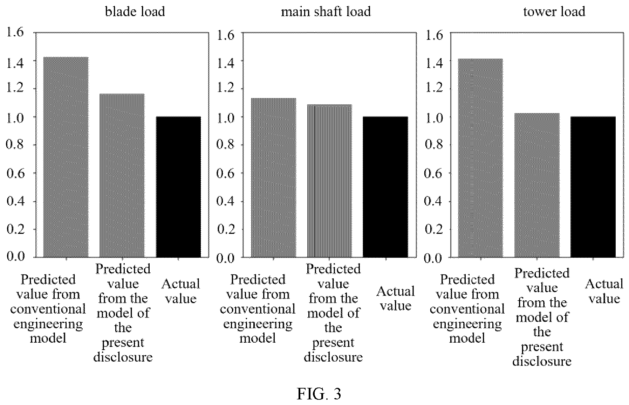

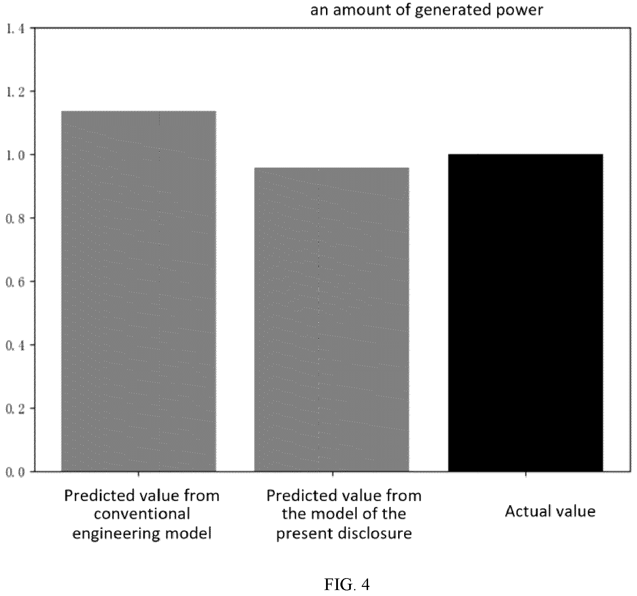

Using the above method, predicted values of the amount of generated power and load for turbine location B04 are calculated. The predicted values are compared with predicted values from a commonly used wake model in engineering and actual measured values of the wind turbine, to obtain results shown in FIGS. 3 and 4.

FIG. 3 shows predicted load values for various parts of the wind turbine, which are normalized according to the actual load values. The predicted turbine load value in embodiments of the disclosure is closer to the actual load value. FIG. 4 shows the predicted values of the amount of generated power, which are normalized according to the actual power generation. The predicted amount of generated power in embodiments of the disclosure is closer to the actual amount of generated power.

Therefore, according to the method provided in the present disclosure, the load and the amount of generated power of the wind turbine are predicated more accurately, and computational efficiency are higher.

FIG. 6 is a schematic block diagram of an apparatus for assessing status of wind turbines based on a dynamic wake meandering model according to embodiments of the disclosure. As shown in FIG. 6, embodiments of the disclosure further provide an apparatus for assessing status of wind turbines. The apparatus includes a memory, a processor, and a program stored in the memory and running on the processor. The processor is configured to implement the method in any of the above embodiments when the processor executes the program. The processor may be a central processing unit (CPU), a digital processing unit, or the like. The processor transmits and receives data through a communication interface. The memory is configured to store the program executed by the processor. The memory is any medium that can be used to carry or store a desired program code in the form of instructions or data structures and that can be accessed by a computer, or may be a combination of a plurality of memories. The above-described computing programs may be downloaded from a computer-readable storage medium to a respective computing/processing device or to a computer or an external storage device via a network, such as the Internet, a local area network, a wide area network, and/or a wireless network. Here, the memory and the processor may be integrated together or may be separately provided.

Embodiments of the disclosure provide a non-transitory computer-readable storage medium, on which a program is stored, where the program, when executed by a processor, causes the processor to perform any operation of the method described in the above embodiments.

If the above functions are implemented in the form of software functional units and sold or used as independent products, they can be stored in a computer-readable storage medium. Based on this understanding, the technical solution of the present disclosure, or the part that makes contributions to the existing technology, or part of the technical solution, can be embodied in the form of a software product. This computer software product is stored in a storage medium and includes several instructions to enable a computer device (which can be a personal computer, server, or network device, etc.) to execute all or part of the steps of the methods described in various embodiments of the present disclosure. The aforementioned storage medium includes: USB drives, mobile hard disks, read-only memory (ROM), random access memory (RAM), magnetic disks, or optical discs, and various other media that can store program code.

## Claims

1. A method for assessing status of wind turbines, comprising:
constructing a wake surrogate model corresponding to a wind turbine, wherein the wake surrogate model is configured to obtain a velocity deficit percentage and an additional turbulence intensity value at each point in a wake region of the wind turbine based on wind condition information and wind turbine information;
arranging the wind turbines in a wind turbine array in a direction of a wind speed;
obtaining wind condition information and wind turbine information of a first wind turbine of the wind turbines and inputting the wind condition information and the wind turbine information of the first wind turbine into the wake surrogate model to obtain a velocity deficit percentage and an additional turbulence intensity value at each point in a wake region of the first wind turbine;
for each current wind turbine of the wind turbines starting from a second wind turbine of the wind turbines, calculating an overlapping area between a rotor plane of the current wind turbine and a wake region of a previous wind turbine, updating, in response to the overlapping area being not equal to zero, a velocity deficit percentage at each point in the wake region of the previous wind turbine based on a relationship between the overlapping area and an area of the rotor plane of the current wind turbine, superimposing an additional turbulence intensity value and an updated velocity deficit percentage at each point in the wake region of the previous wind turbine onto wind condition information of the current wind turbine, and determining a superimposed wind condition information of the current wind turbine as an updated wind condition information of the current wind turbine; and
obtaining, for each wind turbine of the wind turbines, an amount of generated power and a load of the wind turbine according to the wind turbine information and the updated wind condition information of the wind turbine.

2. The method of claim 1, wherein the wind condition information includes at least a wind speed and a turbulence intensity.

3. The method of claim 1 or 2, wherein constructing the wake surrogate model corresponding to the wind turbine includes:
generating multiple virtual inflow wind conditions and extracting wind speed information of each of the multiple virtual inflow wind conditions;
for each type of wind turbines among multiple types of turbine types, performing simulating across each of the multiple virtual inflow wind conditions to obtain a velocity deficit percentage and an additional turbulence intensity value at each point in the wake region of the type of wind turbines under each of the multiple virtual inflow wind conditions; and
constructing the wake surrogate model corresponding to the wind turbine based on the velocity deficit percentage and the additional turbulence intensity value at each point in the wake region of each type of wind turbine under each of the multiple virtual inflow wind conditions.

4. The method of any one of claims 1 to 3, wherein updating the velocity deficit percentage at each point in the wake region of the previous wind turbine based on the relationship between the overlapping area and the area of the rotor plane of the current wind turbine includes:
calculating an area ratio of the overlapping area and the area of the rotor plane of the current wind turbine, and updating the velocity deficit percentage at each point in the wake region of the previous wind turbine based on the area ratio obtained.

5. The method of any one of claims 1 to 4, wherein the method further comprises:
determining, in response to the overlapping area between the rotor plane of the current wind turbine and the wake region of the previous wind turbine being equal to zero, the wind condition information of the current wind turbine that has not been subjected to superimposing as the updated wind condition information of the current wind turbine.

6. The method of claim 4, wherein updating the velocity deficit percentage at each point in the wake region of the previous wind turbine based on the area ratio obtained includes:
multiplying the area ratio obtained with the velocity deficit percentage at each point in the wake region of the previous wind turbine to obtain an updated velocity deficit percentage at each point in the wake region of the previous wind turbine.

7. The method of any one of claims 1 to 6, wherein the method further comprises:
for a respective wind turbine of the wind turbines other than the first wind turbine and a last wind turbine of the wind turbines, obtaining the velocity deficit percentage and the additional turbulence intensity value at each point in the wake region of the respective wind turbine based on the wind turbine information and the updated wind condition information of the respective wind turbine.

8. The method of any one of claims 1 to 7, wherein obtaining, for each wind turbine of the wind turbines, the amount of generated power and the load of the wind turbine according to the wind turbine information and the updated wind condition information of the wind turbine includes:
for each wind turbine of the wind turbines,
obtaining the amount of generated power of the wind turbine according to the wind turbine information and a time series of the updated wind condition information of the wind turbine;
obtaining a wind frequency turbulence matrix according to the time series of the updated wind condition information of the wind turbine; and
reconstructing a three-dimensional wind condition for wind turbine load simulation according to the wind frequency turbulence matrix to calculate the load of the wind turbine.

9. An apparatus for assessing status of wind turbines, including at least one memory, at least one processor, and programs stored in the at least one memory, wherein the programs, when executed by the at least one processor, causes the at least one processor to perform the method of any one of claims 1 to 8.

10. A non-transitory computer-readable storage medium, on which a program is stored, wherein the program, when executed by a processor, causes the processor to perform the method of any one of claims 1 to 8.
